# EUROPEAN PATENT SPECIFICATION

(11) **EP 4 437 711 B1**
(45) Date of publication and mention of the grant of the patent: **29.10.2025**
(21) Application number: 21823227.0
(22) Date of filing: 27.11.2021
(51) Int. Cl.: H04L 67/02, H04L 67/00, H04L 69/22

(54) **CONFIGURING A MACHINE DEVICE EFFICIENTLY OVER A NETWORK**
EFFIZIENTE KONFIGURATION EINER MASCHINENVORRICHTUNG ÜBER EIN NETZWERK
CONFIGURATION EFFICACE D'UN DISPOSITIF DE MACHINE PAR LE BIAIS D'UN RÉSEAU

(43) Date of publication of application: 02.10.2024
(73) Proprietor: ZOE Life Technologies AG, 9100 Herisau (CH)
(72) Inventor: POLLERT, Heiner, 80331 München (DE); SCHLOER, Hardy, 80331 München (DE)
(74) Representative: Reich, Jochen
(86) International application number: PCT/EP2021/083255
(87) International publication number: WO 2023/094002

(56) References cited:
- US-A1- 2018 247 221
- US-A1- 2020 302 018
- US-B1- 10 997 369

## Description

The present invention is directed towards a method for addressing machine devices in a novel manner by involving IPv6 header information in the process of configuring an end device. This does not only refer to network components such as servers or routers but any device can be operated in this way in case it provides a respective interface. The suggested method can rely on heavily heterogeneous data sources, which includes data representation in any type and format. The computer implemented method is able to detect superior information in such data sources and is able to transfer such data into a data format being specifically tailored to specific end devices. Hence, the resulting data can be efficiently processed by further devices and accordingly the suggested method is suitable for big data analysis. The invention is furthermore directed towards a respectively arranged system along with a computer program product and a computer-readable medium.

EP 1 714 445 B1 shows communication systems, and more particularly configuring addresses in a packet switched communication system for communication network elements, such as telecommunication equipment.

EP 2 751 955 B1 shows a resource manager, system, and method for communicating resource management information for smart energy and media resources using IPv6.

The Internet Protocol version 6, IPv6 for short, is commonly known in the art and is used for addressing web sites, hosts, servers and in general internet resources. More sophisticated approaches address machines such as robots or technical devices from the domain of the internet of things. In general IPv6 addresses are represented as eight groups, separated by colons, of four hexadecimal digits. IPv6 provides an Internet Layer protocol for packet-switched internetworking and moreover provides end-to-end datagram transmission across multiple IP networks.

WO 2019/086638 A1 shows a method for building computing machinery out of multiple separate networked components, wherein the method of assigning addresses to individual network nodes is designed to make improbable, to any required degree of certainty, the possibility that one node in the network or subnetwork has the same address as another node in the network or subnetwork, and for communicating messages to and from such nodes with assigned addresses to other and possibly different nodes with possibly different addresses in said computer network. The multiple separate network nodes are capable of computing functions on the data sent to them, and of responding with the data resulting from said computations or transmitting such results to other nodes in the network. Collectively a system of such nodes implements a finite general purpose Turing machine.

WO 2020/079014 A1 shows representations of physical objects in text, stores them in a particular type of database, and allows simplified retrieval and abstraction of said physical objects. The simplified retrieval and abstraction facilitates the drawing of inferences regarding properties and behavior of a particular object from consideration of other properties and behaviors of that object and from references to that object and associations related to that object.

WO 2014/ 074426 A1 shows a method for predicting social sentiment of a plurality of persons.

US10997369 B1 discloses generating best next communication policies, for a time step of an exchange of electronic documents.

The prior art distinguishes between header information and payload information. This may result in problems as network devices handle these information types differently. At least an alternative solution is required to configure end devices. Typically the potential of IPv6 is not fully exploited as for instance the extension headers can carry also unintended information.

The prior art shows several techniques for extracting information from text items and transfer such information into a visual representation. However, not every data model is suitable for any purpose and accordingly, there is a need for developing specific techniques of data extraction and data modeling. At least an alternative solution enhancing and completing existing solutions shall be provided.

Hence, the overall object is to provide a method and an apparatus that are able to deliver efficient outputs even for big data applications. Accordingly, it is also an object of the present invention to provide a system arrangement being designed in accordance with the suggested method. Moreover, it is an object of the present invention to provide a respectively arranged computer program product and a computer-readable medium.

The object is solved by the subject-matter according to claim 1.

Accordingly, a computer implemented method for extracting machine readable multi-dimensional parameter sets is suggested, comprising the steps of storing a set of named object entities and assigning respectively one vector of technical values to each of the object entities; reading out a heterogeneous data source over a distributed communication network and identifying the named object entities therein; calculating a count the occurrences of each of the named object entities in the heterogeneous data source and weighting the vector of technical values in accordance with the calculated count per object entity; storing the weighted vector in a header of an IPv6 datagram; and transmitting the IPv6 datagram to a machine device for its configuration based on header information..

The present invention develops technical aspects of the application domains of IPv6 further in the direction of addressing hardware and providing specific hardware configurations. It has been surprisingly found out that IPv6 provides several technical advantages over the prior art when addressing and configuring machines as the concepts can largely contribute to an advanced addressing of machines over the network as the IPv6 addresses can be distributed over existing networks at great speed and moreover very reliably.

Moreover, IPv6 provides technical advantages over previous versions such as IPv4 for instance when it comes to coding information. The present invention aims at configuration of hardware modules in a unique way such that each component can individually be addressed, not over a broadcast, which is of such efficiency regarding latency that the addressing of components can be performed at real time. Hence, hardware being security relevant is addressed almost immediately surprisingly making real time applications possible such as autonomous driving or precise control of manufacturing robots.

The protocol used for the underlying scenario is more efficient due to some design specifications for instance the size of packages may be reduces by leaving out optional header fields. The present invention enhances the scope of known protocol such that huge amounts of machine readable languages can be processed and communicated over a network.

The present invention makes use of the data fields in IPv6 that are unused and can therefore code additional payload information. For instance the IPv6 format holds so called extension headers that may hold optional information. **In** case this optional information is not used it can be used for the purposes of the present invention and code payload data as currently suggested. The data can be coded in the header fields and/ or even in the address fields in case not the full address range is required to address a specific receiver. As previous versions such as IPv4 required less blocks it was found out that not the full excessive range of IPv6 is required but even in the address blocks payload can be coded. Once the receiver recognizes the semantics of the address fields they can code both address and payload data. **In** this way payload can be transmitted in packages that are to be sent anyway and hence less bandwidth is required. The coding of information in the IPv6 headers provides an alternative solution compared to the coding in the payload sections and provides network specific advantages as the IPv6 packets are handled differently by network components.

IPv6 addresses are identifiers for single or multiple interfaces for end devices. Different treatment results from the three types of addresses. A unicast address is an identifier for a single interface. A data packet sent to the unicast address is delivered to the interface marked with this identifier. Anycast addresses are identifiers for a number of interfaces belonging to different devices. A data packet sent to an anycast address is delivered to an interface marked with this identifier. Multicast addresses identify a number of interfaces that belong to different devices. A data packet sent to a multicast address is sent to all interfaces with this identifier. Thus, there are differences in the treatment of the encodings, whether they are now sent as IPv6 signal data or as user data. This has been recognized by the present invention and accordingly encodes data in the IPv6 format. One of the contributions is that the payload data is coded in the IPv6 header instead of the payload section.

Another technical advantage of the present invention is that information can be hidden in the IPv6 datagram. As information can be coded in the header or extensions headers a fraudulent user does not expect information to be coded here but rather expects signaling data rather than payload data.

**In** a preliminary step storing a set of named object entities is performed. This may be done such that a natural language vocabulary is selected and from such a language specific nouns are extracted. Such nouns or verbs or further types of language parameters may be defined as object entities representing a subset of the overall natural language. For doing so existing techniques may be applied and there are as well data sets that already contain such object entities.

However, once such object entities are identified they are assigned to a vector of technical values. There may be several sets of object entities and accordingly, for each subset of the natural language a vector is designed for each noun. Hence, each object entity holds a vector, the vector comprising several values. Such values may be for instance numeric values. The vector can be arranged in an n-dimensional data space, wherein n is the number of parameters or values being defined in the vector. Hence, in case the vector holds three values the instances of the vector can be arranged in a cube-like structure. While this is understood by the human brain the vector space may also be of a dimension being out of human understandable and perceivable space.

The identification of respective values may be accomplished using training data, which assigns each object entity several values according to a specific dimension. For instance, such a dimension may be 'helpful' and a further information may be 'informative'. Hence, an object entity may be classified with a value of 1 for informative and a value of 0.3 for helpful. This means that the respective object entity has been fully informative but only little helpful. **In** this way technical manuals can be structured and evaluated according to their purpose and further usage.

Further defining the above example an object entity may be a 'configuration file', which may be in a certain perspective be informative but not helpful. **In** case a user wants to install a computer system a configuration file may be informative but not helpful. As this is only an example the values may be defined according to any purpose. The perspective again may be reflected in the set of object entities. The object entities may be of a specific technical filed, while a further set of object entities may represent a field arising from chemistry. Hence, one single object entity may be informative in the technical field but none informative in the chemical field. This allows the present invention to implement several perspectives in different fields.

Once such a set of named object entities is stored and the respective vector is stored for each object entity a heterogeneous data source is read out. This can be accomplished using a distributed communication network such as the internet. Further networks may also be suitable such as a company-wide telecommunication infrastructure. The distributed network may also comprise wireless data communication. The heterogeneous data source may be used in its entireness or only parts thereof depending on the overall size of the data provided. For instance the heterogeneous data source may be read out in single information items. Such an information item may comprise a textual item, a picture, a sound, an image, a database, a configuration file or any combination thereof. Hence, any data source can be accessed according to the suggested method. The items may be provided such that for instance an article is analyzed, wherein the article comprises text and some pictures.

The named object entities are identified by an appropriate matching technique. This may for instance be natural language processing or pattern matching. **In** case an image is provided, for instance a photo, then objects are identified using pattern matching to be accomplished using predefined images of object entities. **In** this way the object entities, which were previously defined are identified in the heterogeneous data source.

Once such information is available the gathered information can be analyzed. During the analyzation process calculating an account of the occurrences for each of the named object entities in the heterogeneous data source is performed. Hence, it is identified how often the previously defined object entities are contained in the respective information item. Merely as an example the object entity 'server' may be comprised ten times in the information item and the object entity 'database' may be comprised fifteen times. While in general one might think that the object entity of the database is more important than the object entity server this only represents a perspective. The perspectives again are reflected in the vector and each dimension is assigned specific semantics. Hence, according to a first purpose a server might be more interesting than a database, while according to a further purpose it may be the other way round. Hence, the respective perspective is reflected in each dimension by a technical value.

Once the occurrences are counted there are weighted using their vector and the calculated count. This may be performed by multiplying the count with the respective vectors. As texts differ in their size or general data sources differ in their size it may be appropriate to normalize the outcome. Normalizing in this case means putting the count into relation with the overall data size. **In** case the evaluated data is large it comes by nature that there are more counts. This observation is put into context by a normalization algorithm. Hence, the calculated count may likewise be a relative count considering the size of the examined data.

After that the weighted vector is arranged in a multidimensional data space. This step might involve a graphical representation of the weighted vector such that for instance the technical values are arranged along a coordinate system. Depending on the number of dimensions this might involve a reduction of the number of dimensions. Several techniques can be applied for doing so, for instance three dimensions can be combined such that an RGB code results. Hence, the technical values present a parameter indicating Red, Green and Blue. For instance, in case six dimensions are present, the first three dimensions might indicate the RGB code and the next three dimensions might indicate a position in a three-dimensional coordinate system. Moreover, dimensions can be clustered such that several dimensions are combined towards one single dimension. For instance, a data point in a multidimensional space might be reduced to a single data point being the most representative data point.

A further contribution of the present invention is to arrange the information in the multidimensional space under indication of specific deviations from normal distributions. Hence, the suggested method might be performed several times and the weighted vectors are calculated. The arrangement of the weighted vector in the multidimensional data space may be accomplished such that only those values are considered that drastically change over time. Hence, in case one dimension stays the same or does not change over a predefined threshold it is not considered for data representation. In this way only the changing dimensions are considered and are presented for further consideration. This allows the modeling of a behavior over time.

Summarizing the above in case only two dimensions change over time they can be extracted and represented in the coordinate system. The same holds true for three dimensions, which can then be arranged in a three-dimensional cube indicating the dynamic behavior of object entities.

Moreover, clustering may be performed such that not only vectors of single object entities are considered but the invention also refers to clusters of several object entities. This opens the possibility that for instance an article is evaluated and consequently, a set of weighted vectors result. This provides the opportunity that not only single object entities are represented in the multidimensional space but also data items such as articles. **In** this way the heterogeneous data source is broken down into information items, which again contain several object entities.

Once the vector is arranged in the multidimensional data space it can be addressed by further devices and the representation can be used for processing the data and for initializing control commands. Initializing further control commands might include that the data is used as input for a further interface. This may be a graphical interface representing the data or that the data is used for further processing. The data may be used for input in a machine or robot such as a software agent. Initializing control commands might include that the weighted vector serves as input for a function or method. For instance, the weighted vector might be used for invocation of further instructions thereby handing over the vector.

The weighted vector can be stored in the address block or the extension headers of an IPv6 datagram. Both the sender and the receiver shall agree on the underlying format in order to be able to interpret the provided data.

According to an aspect of the present invention the weighted vector is stored in an extension header or at least one address block of the datagram. This provides the advantage that the information can be coded in optional data fields and can hence be transmitted with the IPv6 datagram. As indicated above the IPv6 packages may be treated differently by network components and hence an alternative way of representing and transmitting data is suggested.

According to a further aspect of the present invention the weighted vector provides configuration parameters for the machine device. This provides the advantage that the device can be configured using IPv6 datagrams. The payload can be used and moreover data specified in the hexa decimal system is used. This offers a wide range for additional provision of data.

According to a further aspect of the present invention a database is provided indicating further processing information about the weighted vector. This provides the advantage that the receiver obtains information on how to handle and interpret the received data.

According to a further aspect of the present invention a sequence number is provided in the IPv6 diagram. This provides the advantage that in case packages are delivered that form a control flow or a sequence of configuration data this flow can be rearranged to retrieve the originally intended order.

According to a further aspect of the present invention the heterogeneous data source is divided into sets of information items and the method is performed on at least a selection of the sets of information items. This provides the advantage that the heterogeneous data can be divided into predefined sets of object entities, such as those being provided by an article. An article might represent an information item, which holds several object entities. **In** this way the weighted vector of each object entity can be set into relation with a further vector. For instance, several vectors can be established for an information item. Hence, an article is evaluated comprising text and an image. The text holds several object entities and the image might hold several object entities. For each of the object entities a weighted vector is established and all those vectors together may be represented by a single weighted vector. For instance, the middle of all weighted vectors can be computed and hence, the center vector is used for further processing. Accordingly, not the vector of a single object entity is arranged in the multidimensional data space but rather a vector representing the complete article.

According to a further aspect of the present invention identifying the named object entities comprises at least one technique of natural language processing, stemming, computational learning, artificial intelligence, operating a neuronal network, pattern matching, voice recognition, image processing and/ or data analysis. This provides the advantage that any information provided by the heterogeneous data source can be used for data harvesting. For instance, voice recognition may be applied and the resulting text may be analyzed using natural language processing. The provided data can be analyzed by computational learning involving predefined training data sets. Moreover, image processing can be used such that previously defined images are matched to identify object entities.

According to a further aspect of the present invention arranging the weighted vector comprises using a database, an interface, a legacy set of instructions, a graphical output, a coordinate system, a representation device and/ or clustering of weighted vectors generated in several iterations of the method and arranging only one representative vector. This provides the advantage that several techniques can be applied and graphical arrangements can be computed as well as clustering can be performed. For instance, several weighted vectors can be clustered and represented by one prominent single vector. Hence, not only several object entities can be arranged but also a specific information item such as an article. An article may generally be referred to as a specific web page or a section thereof.

According to a further aspect of the present invention the method is accomplished at least twice and the resulting weighted vectors are compared. This provides the advantage that the data representations can be evaluated such that a deviation is identified and hence, dynamics of the underlying system are identified. **In** general, accomplishing the method several times considers that the underlying heterogeneous data base evolves over time and hence, each iteration has typically different results. Accordingly, in case the method is accomplished twice the heterogeneous data source provides different information regarding the first and the second iteration. Hence, a deviation can be identified and presented to the user.

According to a further aspect of the present invention the method is accomplished time delayed at least twice and at least one further vector is extrapolated. This provides the advantage that dynamics can be identified in the heterogeneous data source and hence, the observation can be used to predict further dynamics in the future. For instance in case three dimensions change continuously it can be suggested that these three dimensions continue their change and accordingly a future weighted vector can be calculated. Hence, the underlying system allows the prediction of future facts and information.

According to a further aspect of the present invention selecting one set of named object entities out of several sets of named object entities is performed. This provides the advantage that object entities can be evaluated differently and accordingly, the technical values are adapted accordingly. **In** case a server is of a certain interest according to a first perspective the same notion, namely server, may be not of interest according to a second perspective. Hence, several perspectives or fields of interests can be modeled thereby creating different sets of named object entities. Hence, it is possible, to identify several fields of interest and the data evaluation is accomplished accordingly.

According to a further aspect of the present invention normalizing the weighted vector of technical values over the size of the heterogeneous data source is performed. This provides the advantage that the number of occurrences is set into relation regarding the over-all size of the heterogeneous data source. In case single information items of the data source are evaluated, such as a website, the number of general objects is used and set into relation with the identified named object entities. In this case the problem is addressed that a longer website always contains more occurrences of a specific notion compared to a short website.

The object is also solved by a system arrangement for extracting machine readable multi-dimensional parameter sets, comprising a data storage device arranged to store a set of named object entities and assign respectively one vector of technical values to each of the object entities; a communication interface arranged to read out a heterogeneous data source over a distributed communication network and identify the named object entities therein; a computation device arranged to calculate a count the occurrences of each of the named object entities in the heterogeneous data source and weight the vector of technical values in accordance with the calculated count per object entity; a further computation device arranged to store the weighted vector in a header of an IPv6 datagram; and a machine device arranged to receive the IPv6 datagram and being arranged for configuration based on header information.

The object is also solved by a computer program product comprising instructions to cause the arrangement to execute the steps of the method as well by a computer-readable medium having stored thereon the computer program.

It is of special advantage that the method as suggested above can be executed using structural features of the suggested device and control unit. Accordingly the method teaches steps which are arranged to operate the suggested device. Furthermore, the device comprises structural features allowing the accomplishment of the suggested method. In addition a computer program and a computer program product respectively is suggested comprising instruction which perform the suggested method when executed on a computer or the device according to the present invention. Furthermore, the instructions provide means for implementing the structural features of the claimed device. Accordingly an operable image of the structural features of the device can be created. Likewise an arrangement comprising the structural device features is provided.

Wherever, structural features are provided they can likewise be established virtually thereby creating a virtual instance of physical structures. For instance a device can likewise be emulated. It may be the case that single sub steps are known in the art but the overall procedure still delivers a contribution in its entireness.

Further advantages, features and details of the invention emerge from the following description, in which aspects of the invention are described in detail with reference to the drawings. The features mentioned in the claims and in the description can each be essential to the invention individually or in any combination. The features mentioned above and those detailed here can also be used individually or collectively in any combination. Functionally similar or identical parts or components are in some cases provided with the same reference symbols. The aspects shown and described are not to be understood as conclusive, but are exemplary for explaining the invention. The detailed description is provided for the information of the person skilled in the art; therefore, in the description, known circuits, structures and methods are not shown or explained in detail in order not to complicate the understanding of the present description. The invention will now be described merely by way of illustration with reference to the accompanying figures, which show:
- Figure 1:: a flowchart of a computer implemented method for extracting machine readable multi-dimensional parameter sets according to an aspect of the present invention; and
- Figure 2:: a general procedure used by the computer implemented method for extracting machine readable multi-dimensional parameter sets according to an aspect of the present invention.

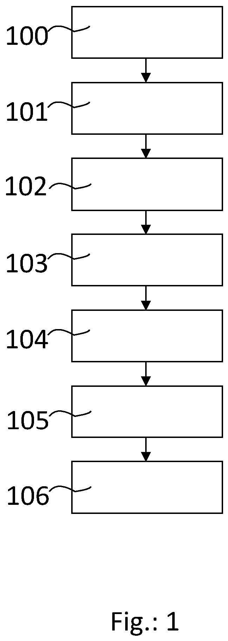

Figure 1 shows a computer implemented method for extracting machine readable multi-dimensional parameter sets, comprising the steps of storing 100 a set of named object entities and assigning respectively one vector of technical values to each of the object entities; reading out 101 a heterogeneous data source over a distributed communication network and identifying 102 the named object entities therein; calculating 103 a count the occurrences of each of the named object entities in the heterogeneous data source and weighting 104 the vector of technical values in accordance with the calculated count per object entity; storing 105 the weighted 104 vector in a header of an IPv6 datagram; and transmitting 106 the IPv6 datagram to a machine device for its configuration based on header information..

The user is able to select a time interval indicating from which to which date the heterogeneous data source is to be considered. Typically documents or information items in general have a time stamp and hence the data basis can be restricted using these intervals.

The person skilled in the art will appreciate that individual method steps can be carried out iteratively and/ or in a different order.

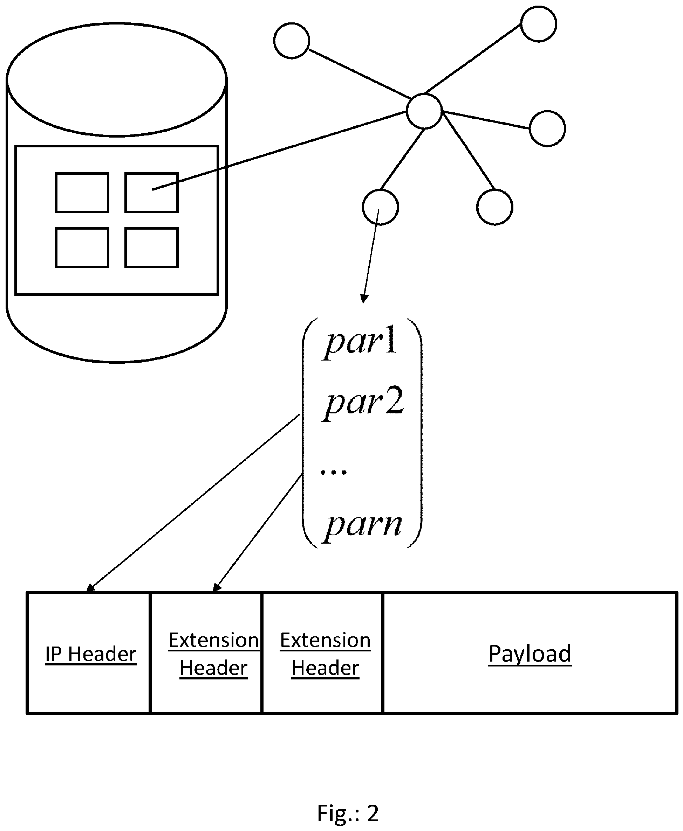

Figure 2 shows the general procedure in which the vector is created, weighted and stored in a header. The weighted vector can be stored in the address block or the extension headers of an IPv6 datagram. Both the sender and the receiver shall agree on the underlying format in order to be able to interpret the provided data.

## Claims

1. A method for configuring a machine device efficiently over a network, comprising:
- storing (100) a set of named object entities and assigning respectively one vector of values to each of the object entities;
- reading out (101) a heterogeneous data source over a distributed communication network and identifying (102) the named object entities therein;
- calculating (103) a count of the occurrences of each of the named object entities in the heterogeneous data source and weighting (104) the vector of values in accordance with the calculated count per object entity;
- storing (105) the weighted (104) vector in a header of an IPv6 datagram; and
- transmitting (106) the IPv6 datagram to a machine device for its configuration based on header information.

2. The method according to claim 1, **characterized in that** the weighted vector is stored in an extension header or at least one address block of the datagram.

3. The method according to claims 1 or 2, **characterized in that** the weighted vector provides configuration parameters for the machine device.

4. The method according to any one of the preceding claims, **characterized in that** a database is provided indicating further processing information about the weighted vector.

5. The method according to any one of the preceding claims, **characterized in that** a sequence number is provided in the IPv6 diagram.

6. The method according to any one of the preceding claims, **characterized in that** the heterogeneous data source is divided into sets of information items and the method is performed on at least a selection of the sets of information items.

7. The method according to any one of the preceding claims, **characterized in that** identifying (102) the named object entities comprises at least one technique of natural language processing, stemming, computational learning, artificial intelligence, operating a neuronal network, pattern matching, voice recognition, image processing and/ or data analysis.

8. The method according to any one of the preceding claims, **characterized in that** arranging (105) the weighted (104) vector comprises using a database, an interface, a legacy set of instructions, a graphical output, a coordinate system, a representation device and/ or clustering of weighted (104) vectors generated in several iterations of the method and arranging only one representative vector.

9. The method according to any one of the preceding claims, **characterized in that** the method is accomplished at least twice and the resulting weighted vectors are compared.

10. The method according to any one of the preceding claims, **characterized in that** the method is accomplished time-delayed at least twice and at least one further vector is extrapolated.

11. The method according to any one of the preceding claims, **characterized in that** selecting one set of named object entities out of several sets of named object entities is performed.

12. The method according to any one of the preceding claims, **characterized in that** normalizing the weighted vector of technical values over the size if the heterogeneous data source is performed.

13. System arrangement for efficient configuration of a machine device over a network, comprising:
- a data storage device arranged to store (100) a set of named object entities and assign respectively one vector of values to each of the object entities;
- a communication interface arranged to read out (101) a heterogeneous data source over a distributed communication network and identify (102) the named object entities therein;
- a computation device arranged to calculate (103) a count of the occurrences of each of the named object entities in the heterogeneous data source and weight (104) the vector of values in accordance with the calculated count per object entity;
- a further computation device arranged to store (105) the weighted (104) vector in a header of an IPv6 datagram; and
- a machine device arranged to receive (106) the IPv6 datagram and being arranged for configuration based on header information.

14. A computer program product comprising instructions to cause the arrangement of claim 13 to execute the steps of the method of any one of claims 1 to 12.

15. A computer-readable medium having stored thereon the computer program of claim 14.

## Patentansprüche

1. Verfahren zum effizienten Konfigurieren eines Maschinengeräts über ein Netzwerk, umfassend:
- Speichern (100) eines Satzes von benannten Objektentitäten und Zuordnen jeweils eines Vektors von Werten zu jeder der Objektentitäten;
- Auslesen (101) einer heterogenen Datenquelle über ein verteiltes Kommunikationsnetz und Identifizieren (102) der darin enthaltenen benannten Objektentitäten;
- Berechnen (103) einer Zählung des Auftretens jeder der benannten Objektentitäten in der heterogenen Datenquelle und Gewichten (104) des Wertevektors in Übereinstimmung mit der berechneten Zählung pro Objektentität
- Speichern (105) des gewichteten (104) Vektors in einem Header eines IPv6-Datagramms; und
- Übertragen (106) des IPv6-Datagramms an ein Maschinengerät zu dessen Konfiguration auf der Grundlage von Header-Informationen.

2. Verfahren nach Anspruch 1, **dadurch gekennzeichnet, dass** der gewichtete Vektor in einem Erweiterungsheader oder in mindestens einem Adressblock des Datagramms gespeichert wird.

3. Verfahren nach Anspruch 1 oder 2, **dadurch gekennzeichnet, dass** der gewichtete Vektor Konfigurationsparameter für das Maschinengerät bereitstellt.

4. Verfahren nach einem der vorhergehenden Ansprüche, **dadurch gekennzeichnet, dass** eine Datenbank bereitgestellt wird, die Weiterverarbeitungsinformationen über den gewichteten Vektor angibt.

5. Verfahren nach einem der vorangehenden Ansprüche, **dadurch gekennzeichnet, dass** eine Sequenznummer im IPv6-Diagramm bereitgestellt wird.

6. Verfahren nach einem der vorhergehenden Ansprüche, **dadurch gekennzeichnet, dass** die heterogene Datenquelle in Informationsmengen unterteilt wird und das Verfahren auf mindestens einer Auswahl der Informationsmengen durchgeführt wird.

7. Verfahren nach einem der vorhergehenden Ansprüche, **dadurch gekennzeichnet, dass** die Identifizierung (102) der benannten Objektentitäten mindestens eine Technik der natürlichen Sprachverarbeitung, des Stemmings, des computergestützten Lernens, der künstlichen Intelligenz, des Betriebs eines neuronalen Netzes, des Mustervergleichs, der Spracherkennung, der Bildverarbeitung und/oder der Datenanalyse umfasst.

8. Verfahren nach einem der vorhergehenden Ansprüche, **dadurch gekennzeichnet, dass** das Anordnen (105) des gewichteten (104) Vektors die Verwendung einer Datenbank, einer Schnittstelle, eines Legacy-Befehlssatzes, einer grafischen Ausgabe, eines Koordinatensystems, einer Darstellungsvorrichtung und/oder das Clustern von gewichteten (104) Vektoren, die in mehreren Iterationen des Verfahrens erzeugt wurden, und das Anordnen nur eines repräsentativen Vektors umfasst.

9. Verfahren nach einem der vorhergehenden Ansprüche, **dadurch gekennzeichnet, dass** das Verfahren mindestens zweimal durchgeführt wird und die resultierenden gewichteten Vektoren verglichen werden.

10. Verfahren nach einem der vorhergehenden Ansprüche, **dadurch gekennzeichnet, dass** das Verfahren mindestens zweimal zeitverzögert durchgeführt wird und mindestens ein weiterer Vektor extrapoliert wird.

11. Verfahren nach einem der vorhergehenden Ansprüche, **dadurch gekennzeichnet, dass** eine Auswahl einer Menge von benannten Objektentitäten aus mehreren Mengen von benannten Objektentitäten durchgeführt wird.

12. Verfahren nach einem der vorangehenden Ansprüche, **dadurch gekennzeichnet, dass** eine Normierung des gewichteten Vektors der technischen Werte über die Größe der heterogenen Datenquelle durchgeführt wird.

13. Systemanordnung zur effizienten Konfiguration einer Maschineneinrichtung über ein Netzwerk, umfassend:
- eine Datenspeichervorrichtung, die dazu eingerichtet ist, einen Satz von benannten Objektentitäten zu speichern (100) und jeder der Objektentitäten jeweils einen Vektor von Werten zuzuordnen;
- eine Kommunikationsschnittstelle, die zum Auslesen (101) einer heterogenen Datenquelle über ein verteiltes Kommunikationsnetz und zum Identifizieren (102) der darin enthaltenen benannten Objektentitäten eingerichtet ist;
- eine Berechnungsvorrichtung, die so angeordnet ist, dass sie eine Zählung des Auftretens jeder der benannten Objektentitäten in der heterogenen Datenquelle berechnet (103) und den Vektor von Werten in Übereinstimmung mit der berechneten Zählung pro Objektentität gewichtet (104);
- eine weitere Berechnungsvorrichtung, die zum Speichern (105) des gewichteten (104) Vektors in einem Header eines IPv6-Datagramms eingerichtet ist; und
- eine Maschinenvorrichtung, die so eingerichtet ist, dass sie das IPv6-Datagramm empfängt (106), und die so eingerichtet ist, dass sie auf der Grundlage von Header-Informationen konfiguriert werden kann.

14. Computerprogrammprodukt, das Anweisungen enthält, um die Anordnung nach Anspruch 13 zu veranlassen, die Schritte des Verfahrens nach einem der Ansprüche 1 bis 12 auszuführen.

15. Computerlesbares Medium, auf dem das Computerprogramm nach Anspruch 14 gespeichert ist.

## Revendications

1. Méthode de configuration efficace d'un dispositif de machine sur un réseau, comprenant :
- stocker (100) un ensemble d'entités objet nommées et attribuer respectivement un vecteur de valeurs à chacune des entités objet ;
- lire (101) une source de données hétérogènes sur un réseau de communication distribué et identifier (102) les entités objet nommées qu'elle contient ;
- calculer (103) le nombre d'occurrences de chaque entité objet nommée dans la source de données hétérogène et pondérer (104) le vecteur de valeurs en fonction du nombre calculé par entité objet ;
- stocker (105) le vecteur pondéré (104) dans l'en-tête d'un datagramme IPv6 ; et
- transmettre (106) le datagramme IPv6 à une machine pour sa configuration sur la base des informations de l'en-tête.

2. Méthode selon la revendication 1, **caractérisée par le fait que** le vecteur pondéré est stocké dans un en-tête d'extension ou dans au moins un bloc d'adresses du datagramme.

3. Méthode selon la revendication 1 ou 2, **caractérisée par le fait que** le vecteur pondéré fournit des paramètres de configuration pour le dispositif machine.

4. Procédé selon l'une des revendications précédentes, **caractérisé par le fait qu'**une base de données est fournie pour indiquer des informations de traitement supplémentaires sur le vecteur pondéré.

5. Méthode selon l'une des revendications précédentes, **caractérisée par le fait qu'**un numéro de séquence est fourni dans le diagramme IPv6.

6. Méthode selon l'une quelconque des revendications précédentes, **caractérisée par le fait que** la source de données hétérogènes est divisée en ensembles d'éléments d'information et que la méthode est exécutée sur au moins une sélection des ensembles d'éléments d'information.

7. Méthode selon l'une quelconque des revendications précédentes, **caractérisée par le fait que** l'identification (102) des entités objet nommées comprend au moins une technique de traitement du langage naturel, d'extraction, d'apprentissage informatique, d'intelligence artificielle, d'exploitation d'un réseau neuronal, de correspondance des formes, de reconnaissance vocale, de traitement d'images et/ou d'analyse de données.

8. Procédé selon l'une quelconque des revendications précédentes, **caractérisé en ce que** l'agencement (105) du vecteur pondéré (104) comprend l'utilisation d'une base de données, d'une interface, d'un ensemble d'instructions, d'une sortie graphique, d'un système de coordonnées, d'un dispositif de représentation et/ou le regroupement de vecteurs pondérés (104) générés au cours de plusieurs itérations du procédé et l'agencement d'un seul vecteur représentatif.

9. Méthode selon l'une quelconque des revendications précédentes, **caractérisée par le fait que** la méthode est accomplie au moins deux fois et que les vecteurs pondérés qui en résultent sont comparés.

10. Méthode selon l'une quelconque des revendications précédentes, **caractérisée par le fait que** la méthode est exécutée au moins deux fois en différé et qu'au moins un autre vecteur est extrapolé.

11. Méthode selon l'une quelconque des revendications précédentes, **caractérisée par** la sélection d'un ensemble d'entités objet nommées parmi plusieurs ensembles d'entités objet nommées.

12. Procédé selon l'une quelconque des revendications précédentes, **caractérisé par** la normalisation du vecteur pondéré des valeurs techniques en fonction de la taille de la source de données hétérogènes.

13. Système de configuration efficace d'une machine sur un réseau, comprenant
- un dispositif de stockage de données conçu pour stocker (100) un ensemble d'entités objet nommées et attribuer respectivement un vecteur de valeurs à chacune des entités objet ;
- une interface de communication conçue pour lire (101) une source de données hétérogènes sur un réseau de communication distribué et identifier (102) les entités objet nommées qu'elle contient ;
- un dispositif de calcul conçu pour calculer (103) le nombre d'occurrences de chacune des entités objet nommées dans la source de données hétérogène et pour pondérer (104) le vecteur de valeurs en fonction du nombre calculé par entité objet ;
- un autre dispositif de calcul conçu pour stocker (105) le vecteur pondéré (104) dans l'en-tête d'un datagramme IPv6 ; et
- un dispositif machine conçu pour recevoir (106) le datagramme IPv6 et conçu pour la configuration sur la base des informations de l'en-tête.

14. Produit programme d'ordinateur comprenant des instructions permettant à l'arrangement de la revendication 13 d'exécuter les étapes de la méthode de l'une des revendications 1 à 12.

15. Support lisible par ordinateur sur lequel est stocké le programme informatique de la revendication 14.
